# EUROPEAN PATENT APPLICATION

(11) **EP 1 713 202 A1**
(43) Date of publication of application: **18.10.2006**
(21) Application number: 06111268.6
(22) Date of filing: 16.03.2006
(51) Int. Cl.: H04L 12/24

(54) **Method of navigation in at least one graphic user interface, corresponding computer program product, storage means and controller**

(30) Priority: 14.04.2005 FR 0503752
(71) Applicant: CANON EUROPA N.V., NL-1185 XB Amstelveen (NL)
(72) Inventor: Bizet, Stéphane, 35340, LIFFRE (FR); Raguet, Emmanuel, 35560, LE RHEU (FR)
(74) Representative: Guéné, Patrick Lucien Juan Joseph

(57) **Abstract**

A method of navigation in at least one graphic user interface coming from a device included in a communications network comprising a plurality of devices, comprises the following steps implemented in a controller connected to a display device: the detection of a first navigation command signal coming from a remote-control unit and associated with a function; the verification of the display, on the display device, of at least one graphic user interface of the controller in which navigation functions are applicable; in the event of positive verification: the application by the controller of the function associated with the first navigation command signal; in the event of negative verification: the determining of the source device for which a connection with the display device is set up; and the transfer to the source device of at least one piece of information enabling the source device to apply the associated function to the first navigation command signal.

## Description

### 1. Field of the Invention

The field of the invention is that of graphic user interfaces (GUI) representing functions of devices and used to control the working of these devices.

More specifically, the invention relates to a technique of navigation in at least one graphic user interface coming from a device included in a communications network comprising a plurality of devices.

The following is the general context of this document. A controller possesses a graphic user interface that may be displayed on a display device connected to a control device or controller. A connection may be set up between the display device and a source device. To control the control device or controller, a user is guided by the graphic user interface of this controller (displayed on the display device) and has a remote-controller by which first command signals can be sent to the controller. The user must also be able to control the source device by sending it second command signals and, as the case may be, by being guided by the graphic user interface of this source device (if the device has a graphic user interface as is becoming increasingly frequent).

The invention can be applied especially but not exclusively within a home audiovisual network whose core is a backbone network comprising a plurality of nodes enabling the interconnection of a plurality of analog and/or digital type audio and/or video terminals (also called devices) so that they exchange audiovisual signals. The backbone network is, for example, of a high-bit-rate switched type, enabling especially the real-time exchange of moving pictures for distribution in a dwelling, each node being placed in a distinct room of a dwelling. The terminals belong for example to the following list of devices (which is not exhaustive): television receivers (using satellite, RF channels, cable, xDSL and other means), television sets, videocassette recorders, scanners, digital video cameras, digital cameras, DVD readers, computers, personal digital assistants (PDAs), printers, etc.

In this particular application, each node of the backbone network may play the role of the controller and the display device that is connected to it is, for example, a television set. The source device (for example a DVD reader or a videocassette recorder) is connected either to the node playing the role of the controller or to another node.

### 2. Prior art

We shall now present the drawbacks of the prior art in the above-mentioned particular case where the controller is a node of a home audiovisual network. It is clear that this discussion can be extended to any situation that complies with the above-mentioned the general context.

It is assumed for example that, in the room in which he is placed, the user has before him a node (a controller), as well as a television set (a display device) connected to this node. It is also assumed that a connection is set up, through the network, between the above-mentioned television set and a source device (for example a DVD reader) placed in another room. Classically, the node and the source device each have their own graphic user interface. The graphic user interface of the node has different screens (menu levels) enabling management of the network (log-on or start screen, selection of a device, network configuration, setting up connections etc.). The graphic user interface of the source device itself also comprises different screens (menu levels) used to control the working of the source device (for example, for a DVD reader: start screen, initiate playback of main content (film for example), parametrization of sub-titles, parametrization of language, access to secondary contents (bonus) etc.). The television sets can therefore display information of different types: the graphic user interface of the node, the audio-video stream (AV stream) generated by the source device, the graphic user interface of the source device, or again a combination of several of these pieces of information (for example of the AV stream and the graphic user interface of the source device, although graphic user interface of the node and the AV stream).

In this particular context, the user must therefore control the node and the source device.

In a first prior-art solution, the user uses a first remote-control unit to control the node and a second remote-control unit to control the source device.

One drawback of this first prior art approach is the need for the user to have two remote-control units at his disposal.

In order to overcome this drawback, a second approach has been proposed. This second approach consists of the use of a universal remote-control unit making it possible, after configuration or learning, to play the role of the above-mentioned first and second remote-control units, namely to send first command signals to the nodes and second command signals to the source device.

One drawback of this second known approach is that the user must state which is the device (node or source device) to which he wishes to send a command signal. For this purpose, the universal remote-control unit comprises either a distinct set of keys for each device to be controlled, or one or more keys for the selection of the device to be controlled (this alternative makes it possible to have a set of keys common to the different devices to be controlled).

But above all, these first and second known approaches cannot be chosen in practice because they have the major drawback of not being applicable when the source device is not in the same room as the node before which the user is situated. Now, this is the most frequent situation.

In the French patent application published under No FR 2 828 355, a third approach has been proposed. This approach is applicable in the above-mentioned situation, while necessitating only one remote-control unit. It comprises a learning phase and a using phase.

In the learning phase, the network (i.e. all the nodes or only some of them) is made to learn at least some of the second command signals proper to the source device.

In the use phase, the user, using the first remote-control unit specific to the local node (placed before him), sends this local node a first specific command signal indicating that he wishes to send a second command signal to the source device. This specific signal indicates a switch-over from the control of the node to the control of the source device. After reception of this first specific command signals, the local node retrieves a list of second command signals associated with this source device and stored within the network. Then, through its graphic user interface, the local node enables the user to consult this list and select the second command signal which must be sent to the source device. This selection enables the user to choose a second command signal designed for the source device, without having to use the second remote-control unit specific to the source device. After this selection, two cases of operation can be distinguished depending on whether the source device is connected to the local node or to a remote node.

If the source device is connected to the local node, either the local node sends it the second command signals selected by the user (for example by infrared transmission), if the source device is of the analog type, or the local node (for example through a digital bus) sends it a digital command associated with the same function as the one associated with the second command signal selected by the user, if the source device is of the digital type.

If the source device is connected to a remote node, the local node sends all the necessary information to the remote node so that either the remote node sends the source device (for example by infrared transmission) the second command signal selected by the user, if the source device is of the analog type, or the remote node sends the source device (for example through a digital bus) a digital command associated with the same function as the one associated with the second command signal selected by the user if the source device is of the digital type.

One drawback of this third prior art approach is that, in the use phase, the user cannot make direct use of any key of the first remote-control unit (specific to the node) to control the source device.

In particular, he cannot make direct use of the navigation keys (right, left, up, down, selection, menu etc.) of the first remote-control unit to navigate within a graphic user interface displayed on the display device, whether it is that of the controller or that of the source device. Indeed, for each function that he wishes to make the source device execute (for example "UP") he must first of all send a first specific command signal (a switching signal), indicating that he wishes to send a second command signal to the source device, then select the second command signal from a list.

For the same reasons, the user no longer has the possibility of making direct use of the keys of the first remote-control unit, associated with functions other than those of navigation, to obtain the execution of these functions either by the controller or by the source device. Here, we are looking at the case (which can be envisaged even if it is not practiced or hardly practiced today) where functions other than those of navigation may be performed either at the network level itself (for example, reading by a node of a content stored by this node or by another node), or in the source device (for example, the reading of a DVD by a DVD reader).

A fourth prior-art approach is proposed in the CEA 931A standard, defined in the document "Draft CEA-931-A, Remote Control Command Pass-through Standard for Home Networking". It can be applied when a controller (such as a digital television set) and a controller (such as a DVD reader) are in two different rooms, while at the same time requiring only one remote-control unit. The principle is the following: the universal remote-control function is accomplished by the translation into standard commands, in the controller, of infrared codes coming from the remote-control unit. Then these standard commands are transmitted, through the network, to the controller so that it executes them.

One drawback of this fourth prior-art solution is that the user must indicate which is the device (the controller or one of the controllers) to which he wishes to send a control signal. For this purpose, the remote-control unit has either a set of distinct keys for each device liable to receive commands, or one or more keys for the selection of the destination device for the command (this alternative also makes it possible to have set of keys common to the different destination devices).

### 3. Goals of the invention

It is a goal of the invention especially to overcome the different drawbacks of the prior art.

More specifically, one of the goals of the present invention, in at least one embodiment, is to provide a technique by which a user can control a controller or a source device (in the above-defined context) with a single remote-control unit and without having to indicate, before each dispatch of a command signal, which device must execute the function associated with this command signal.

It is also a goal of the invention, in at least one embodiment, to provide such a technique enabling the user to make direct use (i.e. without preliminary selection of the concerned device) of the navigation keys of the first remote-control unit to navigate within a graphic user interface displayed on the display device, whether this display device is that of the controller or that of the source device.

It is another goal of the invention, in at least one embodiment, to provide such a technique enabling the user to make direct use (i.e. without preliminary selection of the concerned device) of the keys of the first remote-control unit, associated with functions other than those of navigation, to have these functions executed either by the controller or by the source device.

It is another goal of the invention, in at least one embodiment, to provide a technique of this kind that is simple to implement and costs little.

A complementary goal of the invention, in at least one embodiment in which the controller is a node of a backbone network, is to provide a technique of this kind that requires no modification or little modification of the nodes other than the node identified with the controller.

### 4. Summary of the invention

These different goals, as well as others there should appear here below, are achieved according to the invention by means of a method of navigation in at least one graphic user interface coming from a device included in a communications network comprising a plurality of devices. According to the invention, the method comprises the following steps implemented in a controller connected to a display device:
- detecting a first navigation command signal coming from a remote-control unit and associated with a function;
- verifying the display, on the display device, of at least one graphic user interface of the controller in which navigation functions are applicable; and
- in the event of positive verification: applying, by the controller, the function associated with the first navigation command signal;
- in the event of negative verification: transferring to a source device, for which a connection with the display device is set up, at least one piece of information enabling the source device to apply the associated function to the first navigation command signal.

The general principle of the invention therefore consists, in the controller, in processing a received command signal (coming from a remote-control unit proper to this controller) differently depending on whether or not the display device displays or does not display the graphic user interface of the controller. Thus, depending on this criterion, the controller automatically knows whether it must execute the function associated with the received command signal or whether it should transfer at least one piece of information to this device enabling it to apply the associated function to the received command signal. Hence, before each sending of a command signal, the user does not have to state which device must execute the function associated with this command signal.

In practice, in the event of negative verification, the step of transfer of at least one piece of information to the source device comprises the following steps:
- determining the function associated with the first navigation command signal;
- determining a second command signal associated with the function and designed for the source device; and
- sending the second command signal to the source device.

Advantageously, the determining of the second command signal is done through a step for placing said function in correspondence with a list of functions each associated with a second command signal proper to the source device.

This placing in correspondence is implemented for example by means of one or more correspondence tables.

Advantageously, the method also comprises a step for determining the type, whether analog on digital, of the source device.

Thus, the invention can be applied to a source device that is either analog or digital.

In practice, when the device is of an analog type, the second command signal proper to the source device type has been preliminarily recorded during a learning phase by the network associating a function with this second command signal.

Preferably, the second command signal is of an infrared type and is sent to the source device through an analog channel.

Preferably, should the device be of a digital type, the second command signal is of an audio/video digital command type sent to the source device through a digital channel.

In an advantageous embodiment of the invention, in the event of negative verification, the method comprises a step for determining the type, whether local or remote, of the source device, the source device being of the local type if it is directly connected to the controller and of the remote type if it is connected to the controller through the network. Furthermore, if the source device is of the remote type, the step for transferring at least one piece of information to the source device comprises the following steps: determining the function associated with the first navigation command signal; and sending the source device a message, through the network, enabling said function to be obtained.

Thus, the invention also applies to a remote source device in the network.

According to a preferred embodiment, the application by the source device of the function associated with the first navigation control signal is a step of navigation within the graphic user interface of the source device displayed on the display device connected to the controller.

Thus, the user may make direct use (i.e. without preliminary selection of the concerned device) of the navigation keys of the remote-control unit to navigate within the graphic user interface of the controller, which is displayed on the display device.

In an alternative embodiment of the invention, the application by the source device of the associated function to the first navigation command signal constitutes a step for the command of the source device, when the source device does not have a graphic user interface or when the graphic user interface of the source device is not displayed on the display device connected to the controller.

In this way, the user may make direct use (i.e. without preliminary selection of the concerned device) of the keys of the remote-control unit, associated with functions other than those of navigation, to obtain the execution of these functions by the source device.

The invention can be applied especially when the controller is a node of a backbone network comprising a plurality of nodes enabling the interconnection of the terminals, including the source device and the display device.

Advantageously, the graphic user interface of the controller comprises at least one screen belonging to the group comprising:
- screens for the selection of a device from among a list of devices;
- screens for the configuration of the network to be defined;
- screen enabling connections to be set up;
- screens enabling the network to learn at least one second command signal proper to the source device.

This list is not exhaustive.

In the same way, non-exhaustively, the function related to the first navigation command signal may belong to the group comprising: a function for shifting a cursor upwards on a graphic user interface, a function for shifting a cursor downwards on a graphic user interface, a function for shifting a cursor to the right on a graphic user interface; a function for shifting a cursor to the left on a graphic user interface; and a function for accepting the position of the cursor on a graphic user interface.

The invention also relates to a computer program product that can be downloaded from a communications network and/or recorded on a computer-readable support and/or executable by a processor, said computer program product comprising program code instructions to execute steps of said navigation method in at least one graphic user interface, when the program is executed on a computer.

The invention also relates to a computer-readable and totally or partially detachable storage means storing a set of instructions executable by said computer to implement the above-mentioned navigation method in at least one graphic user interface.

The invention also relates to a controller that is connected to a display device and included in a communications network comprising a plurality of devices. According to the invention, the controller comprises:
- means to detect a first navigation command signal coming from a remote command device and associated with a function;
- means to verify the display, on the display device, of at least one graphic user interface of the controller in which navigation functions are applicable;
- means for the application, by the controller, of the associated function to the first navigation command signal, said application means being activated in the event of positive verification by the verification means;
- means for the transfer to a source device, for which a connection with the display device is set up, of at least one piece of information enabling the source device to apply the associated function to the first navigation command signal, said transfer means being activated in the event of negative verification by the verification means.

In one particular embodiment, the means for the transfer of at least one piece of information to the source device comprise:
- means to determine the function associated with the first navigation command signal;
- means to determine a second command signal associated with said function and designed for the source device; and
- means to send the second command signal to the source device.

Advantageously, the means for determining the second command signal comprise means for placing said function in correspondence with a list of functions each associated with a second command signal proper to the source device.

Advantageously, the controller also comprises means for determining the type, whether analog on digital, of the source device.

Preferably, when the device is of an analog type, the second command signal proper to the source device type has been preliminarily recorded during a learning phase by the network associating a function with this second command signal.

Preferably, the second command signal is of an infrared type and the controller comprises means for sending the second command signal to the source device through an analog channel.

Advantageously, the controller comprises the following means, activated if the device should be of a digital type: means for sending a second command signal of an audio/video digital command type to the source device through a digital channel.

In a preferred embodiment, the controller comprises the following means activated in the event of negative verification by the verification means: means for determining the type, whether local or remote, of the source device, the source device being of the local type if it is directly connected to the controller and of the remote type if it is connected to the controller through the network. Furthermore, the means for transferring at least one piece of information to the source device comprise the following means activated if the source device is of the remote type: means for determining the function associated with the first navigation command signal; and means for sending the source device a message, through the network, enabling said function to be obtained.

The invention can be applied very particularly when the controller is a node of a backbone network comprising a plurality of nodes enabling the interconnection of the terminals, including the source device and the display device.

### 5. List of figures

Other features and advantages of the invention shall appear from the following description of a preferred embodiment of the invention, given by way of an indicative and non-exhaustive example and from the attended drawings, of which:
- Figure 1 shows a home network, known in the prior art, in which it is possible to implement the navigation method of the invention in at least one graphic user interface;
- Figure 2 is a block diagram of an audio-video interface module, known in the prior art, contained in a multimedia interface device (node) appearing in figure 1;
- Figure 3 is a flowchart of the processing, known in the prior art, implemented by a local node for the learning by the network of an infrared signal used to control an analog device;
- Figure 4 is a flowchart of the processing, known in the prior art, implemented by a remote node for the learning by the network of an infrared signal used to control an analog device;
- Figure 5 describes the structure, known in the prior art, of an IEEE 1394 packet that can be used for the transfer of signals through the home audiovisual network of the invention;
- Figure 6 is a table of correspondence between functions and infrared signals intended for an analog device;
- Figure 7 is a table of correspondence between AV/C functions and commands intended for a digital device;
- Figure 8 illustrates the possibility offered by the present invention to use a same remote-control unit to navigate in the graphic user interface of a node or in that of a source device without preliminary selection of the node or of the source device;
- Figure 9 is a flowchart of the processing, according to the invention, implemented by a node connected to the source device when it receives a command message transmitted by another node having received an infrared signal; and
- Figure 10 is a flowchart of the processing, according to the invention, implemented by a node having received an infrared signal.

### 6. Detailed description

For the sake of clarity and simplification, the description here below in the document shall be limited to the preferred embodiment of the invention, in which the remote-control unit implemented by the user sends out infrared IR type signals. It will naturally be easy, for those skilled in the art, to extend this description to any other embodiment of the invention implementing any other type of remote-control unit such as for example a high-frequency remote-control unit.

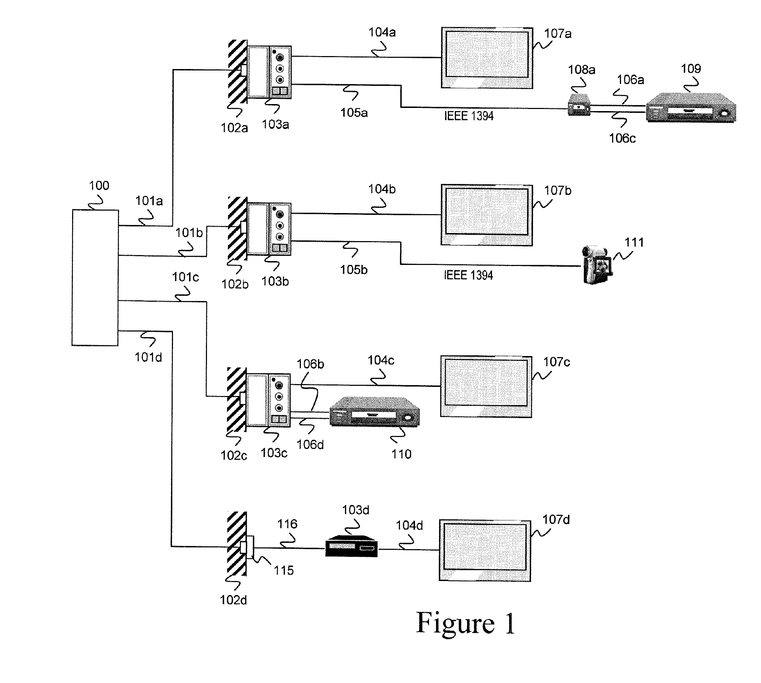

**Figure 1** shows a multimedia communications network in which the method of the invention for navigation in at least one graphic user interface can be implemented. This network is installed for example in a home environment.

The network interconnects devices such as television sets referenced 107a, 107b, 107c and 107d, a set top box referenced 109, a DVD player referenced 110 and a digital camcorder referenced 111.

This network has multimedia interface devices or network adapters referenced 103a, 103b, 103c and 103d (also called nodes hereinafter in the description). The multimedia interface devices referenced 103a, 103b, 103c are for example built into the partition walls 102a, 102b and 102c of the rooms of the dwelling. The multimedia interface device referenced 130d is not built into a partition wall but is connected through a link 116 to the connector referenced 115. These multimedia interface devices are connected to a central switching unit 100 preferably placed beside the electrical power supply panel through links referenced 101a, 101b, 101c, 101d and 116. These links are, for example, of the UTP5 ("Unshielded Twisted Pair, category 5) type as specified in the ANSI/TIA/EIA/568A standard) classically used in Ethernet type networks, and the connector referenced 115 is of the RJ45 type. It must be noted that other types of links, such as optic fiber links or IEEE 1355 compliant cables, could be used.

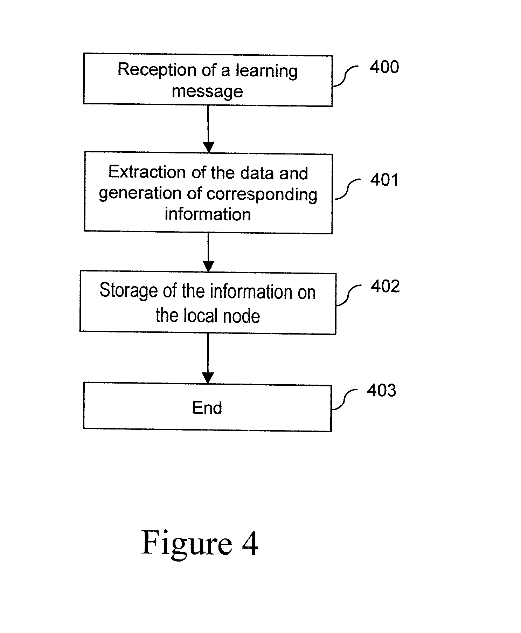

Each of the multimedia interface devices comprises especially connection means of the Ethernet or IEEE1394 type and an analog video output (see discussion of figure 4 here below). All the information obtained by the connection means will be distributed to other remote multimedia interface devices through the central switching unit and links connecting this unit to the different multimedia interface devices.

Thus the multimedia interface devices referenced 103a, 103b, 103c and 103d and the central switching unit 100 together form a backbone network, sometimes also called a "home network backbone".

The television set 107a is connected by means of an analog video link 104a to the multimedia interface device 103a. According to one variant, the link 104a may be compliant with the IEEE 1394 standard and the television set then has an IEEE 1394 board. Similarly the television sets 107b, 107c and 107d are respectively connected to the multimedia interface devices 103b, 103c and 103d by means of analog video links 104b, 104c and 104d.

The set top box (STB) referenced 109 is connected by means of a pair of analog links 106a and 106c (one for the video input and the other for the video output) to an analog/digital converter referenced 108a. This converter is itself connected by means of a IEEE 1394 compliant digital link 105a to the multimedia interface device 103a. This converter converts the analog video information generated by the set top box (STB) 109 to an IEEE 1394 compliant format.

The DVD player referenced 110 is directly connected by a pair of analog links 106b and 106d (one for the video input and the other for the video output), to the multimedia interface device 103c.

Each source device (a set top box (STB) 109, a DVD player 110 and a digital camcorder 111 in this example) is accessible from any room, through one of the display devices (television sets 107a, 107b, 107c or 107d, in this example).

Conventionally, through a remote-control unit placed at his disposal, the user sends infrared commands to one of the multimedia interface devices 103a, 103b, 103c or 103d. These commands are interpreted to set up connections between the source devices and the display devices, or connections between the source devices and the recording devices.

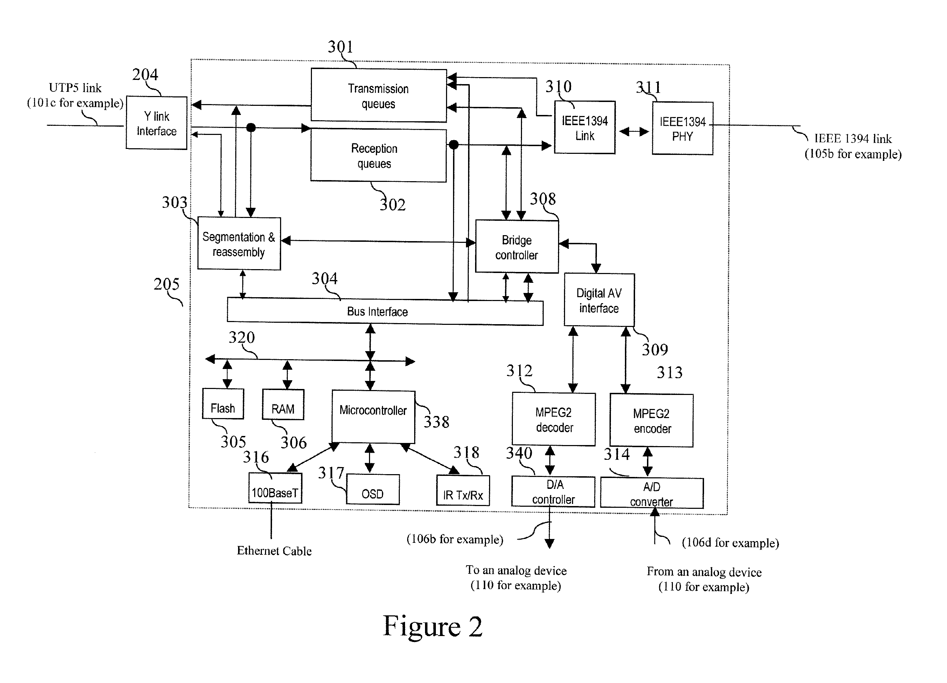

**Figure 2** is a block diagram of an audio/video interface module 205 included in a multimedia interface device (node) referenced 103x, with x = a, b, c or d, in figure 1.

In general, an audio/video interface module 205 possesses a plurality of connection means by which signals of different kinds will be processed. The data coming from these connection means will be mixed together so as to form only one data stream compliant with a given protocol that is forwarded by means of the Y-Link interface 204 on the single medium which, in the example of figure 1, is a UTP5 type link referenced 101x, with x = a, b, c or d.

This audio/video interface 205 will also manage the quality of service constraints associated with these different signals.

The audio/video interface comprises a microcontroller 338 that will transfer data on the bus 320 to RAM (Random Access Memory) type storage means 306, more particularly when the data comes for example from the link 101x.

When the multimedia interface device is powered on, the microcontroller 338 will load the program contained in the flash memory 305 into the RAM 306 and execute the code associated with this program.

The microcontroller 338 will transfer information coming from the different connection means to a transmission queue referenced 301. This transfer complies with the quality of service required for the transfer of this information. Indeed, IEEE 1394 type networks enable the exchange of isochronous or asynchronous type data. The isochronous type data is governed by transmission bit rate imperatives while asynchronous type data can be transmitted without transmission bit rate imperatives. The transfer of data according to a quality of service is described in the European patent application No. 01400316. It shall not be described in fuller detail.

The microcontroller 338 has a 100baseT type Ethernet interface 316 connected to it, enabling the connection of an Ethernet cable.

A character generator or "on-screen display" unit 317 is also connected to the microcontroller 338. This character generator 317 will enable the insertion of information into the video signal transmitted for example on the IEEE 1394 link referenced 105b in figure 1.

An infrared transmission and reception module 318 is also connected to the microcontroller 338. Through this infrared module 318, infrared command signals coming from a remote control unit will be received and then retransmitted by means of the microcontroller 338 to the different devices connected to the network. This transfer of infrared commands is described in the French patent application number FR 0110367. It must be noted that, in one variant, the infrared module is preferably a one-way module.

Through the bus interface 304, the microcontroller 338 will also manage the configuration of the transmission parameters associated with each transmission queue, these parameters being stored in the segmentation and re-assembly module 303.

For the transmission queues associated with an isochronous type data stream (these queues are known as "stream mode buffers"), the segmentation and re-assembly module 303 guarantees the minimum transmission bit rate necessary for the isochronous type data stream on the basis of the transmission parameters.

For the transmission queues associated with an asynchronous type data stream (these queues are known as "message mode buffers"), the segmentation and re-assembly module 303 ensures a maximum bit rate for the asynchronous type data stream on the basis of the transmission parameters.

The transmission parameters associated with each transmission buffer are computed by the microcontroller 338:
- as a function of a reservation of bandwidth in the network for "stream mode buffer" type queues;
- locally as a function of an estimation of the bandwidth available in the network for "message mode buffer" type queues.

The transfer of data according to these two modes of transmission is described in the European patent application number 01400316 and shall not be described more fully.

This data comes:
- either from the devices connected to the IEEE 1394 type links such for example the link 105b,
- or from an analog device (such as for example the videocassette recorder referenced 110 in figure 1) connected to the analog/digital converter 314 (by a link 106d in the above-mentioned example),
- or from a microcomputer type device connected to the Ethernet interface 316.

Should the analog data come, for example, from a video-cassette recorder 110 directly connected to the multimedia interface, this data will be converted by the analog/digital converter 314 and then encoded in an MPEG2 or DV type format by the module 313. This encoded data will then be forwarded by means of the digital audio/video interface 309 and the bridge controller 308 to the transmission queue 301. DV is a shortened form of the SD-DVCR ("Standard Definition Digital Video-Cassette Recorder ") format. MPEG2 is the acronym for "Motion Picture Expert Group 2". It must be noted that the analog/digital converter 108b shown in figure 1 is herein integrated into the multimedia interface device 103c.

Should the data come from a device connected to an IEEE 1394 link such as, for example, the link 105b, two types of processing will be performed depending on the nature of the data. If this data is asynchronous type data, it will travel through the bus interface 304 and be stored in the memory 306. The microcontroller 338 transfers this data to a transmission queue 301 (of the "message mode buffer" type). If it is isochronous type data, the data will travel directly to a "stream mode buffer" type of transmission queue 301.

The microcontroller 338 will also use the bus interface 304 to manage the distribution of the data received by means of the Y link interface 204 and stored in the reception queue 302.

For isochronous type data, and depending on the destination of this data, the microcontroller 338 will activate the transfer of the data either towards the controller of the IEEE 1394 link referenced 310, if this data is intended for at least one of the terminals connected to the bus 105b for example, or towards the bridge controller 308, if the data is intended for an analog device connected to the link 106b for example.

For asynchronous type data, the microcontroller 338 will activate the transfer of the data to the RAM 306 through the bus interface 304. The Ethernet type asynchronous data will then be sent to the interface 316.

The IEEE 1394 type asynchronous data will then be sent to the interface referenced 311.

If the data is intended for an analog device connected to the link 106b for example, the microcontroller 338 will activate the transfer of this data to the digital audio/video interface 309 by means of the bridge controller 308. This MPEG2 or DV type data will then be decoded by the decoder 312 and finally forwarded to the digital/analog converter 340, which enables the transfer of the information in analog form, for example, to the analog device (the video-cassette recorder 110 in this example) connected to the digital/analog converter 340 by the link 106b.

The segmentation and re-assembly module 303 controls the sending of the data in packet form from the transmission queues to the Y link interface 204. Each packet has a routing header as well as a packet type header (of the "message" or "stream" type depending on the transmission queue). The information on routing and type of packet is configured by the microcontroller 338.

Furthermore, the segmentation and re-assembly module 303 controls the reception of the packets from the Y link interface 204 in order to store the data as a function of the type of packet in the appropriate reception queue, which is either of the "message mode buffer" type or of the "stream mode buffer" type.

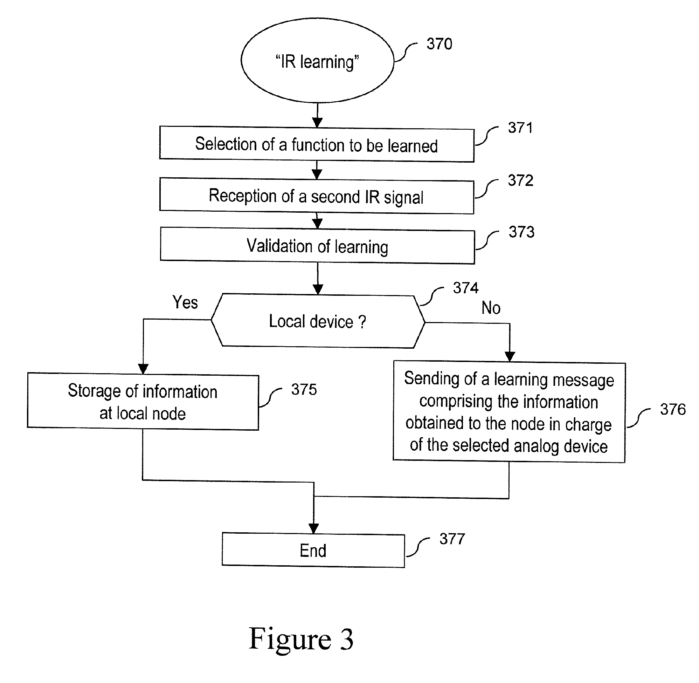

Referring now to **figure 3,** a description is presented of the processing done when an infrared signal has to be learned by the home network..

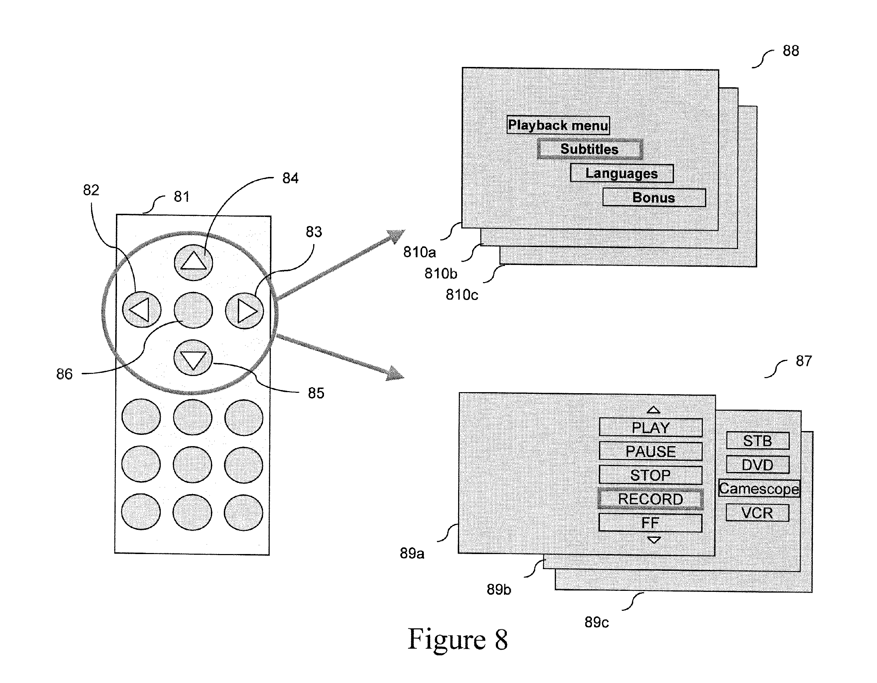

This learning technique is described in detail in the French patent application published under No FR 2 828 355. The network learns the infrared signals emitted by the remote-control units of the analog devices connected to the network. In other words, the network learns infrared signals enabling the analog devices (for example of those referenced 109 and 110 in figure 1) to be controlled. It must be noted that the control of an analog device may, as the case may be, consist in navigating within its graphic user interface if it has one (see figure 8 described here below).

The infrared signals may be learned from any node referenced 103x, with x = a, b, c or d, in figure 1, in navigating in the graphic user interface of this node (also called a network graphic user interface). However, the infrared signals (also called infrared codes) are stored and managed by the node to which the analog device concerned is connected.

In practice, to teach the network an infrared signal enabling the control of an analog device, the user takes position before a node of the network and uses the graphic user interface of the network (which is displayed for example on a television said connected to this node) as well as a remote-control unit dedicated to this node and enabling the sending of proprietary infrared signals enabling navigation within the graphic user interface of the network.

In order to avoid any confusion, here below in the description:
- "second infrared signal" shall denote an infrared signal used to control an analog device, and normally sent by the remote-control unit of the analog device; and
- "first infrared signal" denotes an infrared signal used to control a node (and more generally, through this node, the network), and normally sent by the remote-control unit of this node.

In a step 370, the home network (or at least the node before which the user is placed and which he is controlling, hereinafter called a local node) enters a mode for learning second infrared signals. For this purpose, the user sends for example a second infrared signal, called a learning-phase launch signal. At this stage, the local node is already identified along with the analog device to be controlled.

In a step 371, a function to be learned is selected. The graphic user interface of the local node is adapted to guiding the user in the learning phase. A function to be learned can be selected from a set of predetermined functions and/or a set of functions defined by the user. A predefined function possesses a corresponding key on the remote-control unit of the local node while the other functions are accessible only through a control panel included in the graphic user interface of the local node. For any function whatsoever that is capable of being applied by the analog device, a second infrared signal may be learned. Once the function has been selected, the local node waits for a second infrared signal. The user then presses the key of the remote-control unit specific to the source device to send the second infrared signal which is associated with the selected function to be learned.

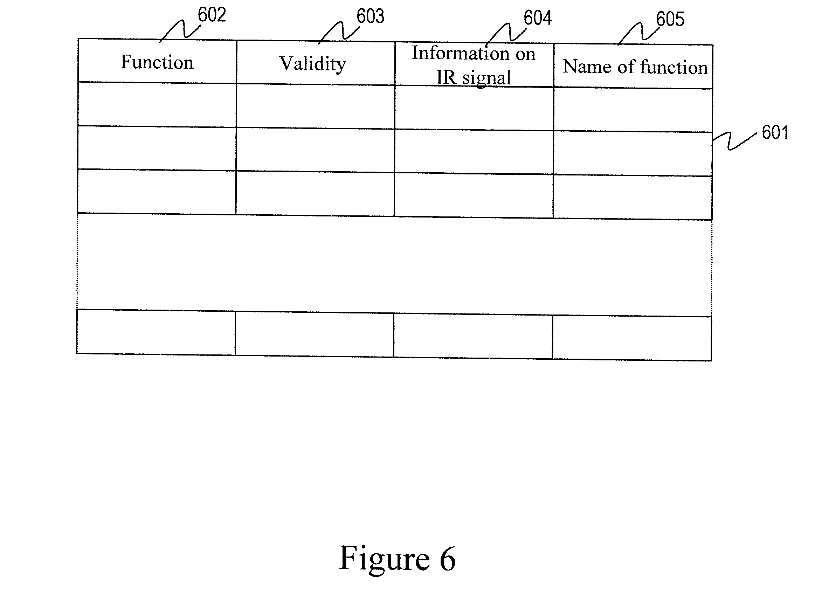

The local node receives this second infra-red signal (step 372) and then, after having validated it (step 373), must store it in relation to the function (as illustrated in figure 6 described here below).

If the analog device is physically connected to the local node (with a "yes" response to the question of step 374), the storage is made in a non-volatile memory of the local node (step 375). Otherwise, a protocol is implemented, according to which the local node sends a learning message to the node to which the analog device is connected (called a remote node), so that this remote node stores the above-mentioned information (pertaining to the second infrared signal and the corresponding function) (step 376).

The learning process has been described here above in the case where the storage of the information has been done after the learning of each function. It is clear that another approach may consist of the recording, in a temporary memory, of all the information received during the learning phase for an analog device and then the storage of this information (or its transmission for remote storage) in a single operation after confirmation by the user.

Purely for the sake of simplifying the figures, no acknowledgement or error-management mechanism has been described in the protocol described in the present document. It is quite possible to add such steps while remaining within the context of the present invention.

Referring now to **figure 4,** a description is given of the processing performed by a remote node receiving, in a step 400, a learning message transmitted by the local node (see step 376 of figure 3).

In a step 401, the remote node extracts the information from the learning message, i.e. at least the data representing the analog device, the data representing the function and its second associated second infrared signal. In a step 402 (as in a similar step 375 performed by the local node) preceding the final step 403, this information is stored in a correspondence table as described here below with reference to figure 6 or by means of any other mechanism enabling the association of the function performed by the analog device and of the second infrared signal required to perform this function.

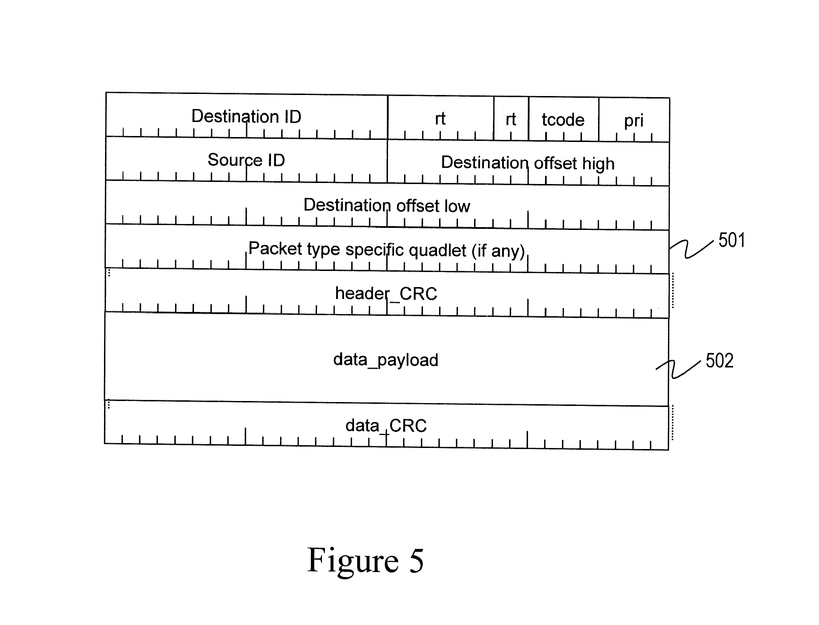

**Figure 5** gives a description of the structure, known in the prior art, of an IEEE 1394 packet that can be used for the transfer of signals through the home audiovisual network of the invention.

An IEEE 1394 packet is an asynchronous packet for which a detailed description can be found in the document "IEEE 1394a-2000 standard". The messages exchanged between nodes (especially the learning messages described here above with reference to figures 3 and 4) are encapsulated in such packets. These packets may also be used for communication between a node and a digital device connected to this node through the use of the IEEE 1394 interface (referenced 311 in figure 2) (as defined in the document "IEC61883 std" and "AV/C Digital Interface Command Set General Specification").

An IEEE 1394 packet referenced 501 in figure 5, comprises especially a *data_payload* field referenced 502 in which the learning messages can be transported.

**Figure 6** is a table of correspondence between functions and second infrared signals for an analog device. Such a table 601 is stored, for each analog device, in a node (for example the one to which this analog device is connected, through an analog video link). Associated with a function identifier 602, a validity field 603 (for example on one bit) indicates whether a second infrared signal corresponding to this function has been learned. This validity field 603 is for example set at "1" after a second infrared signal has been learned for a given function and set at "0" if the field 604 pertaining to the second infrared signal is not significant or no longer significant. The field 604 contains information used to construct the second infrared signal which must be sent to the analog device to fulfill the function indicated in the field 602. The field 605 is optional and represents a name defined by the user for the function. It may be filled by means of a configuration panel or set-up panel forming part of the graphic user interface of the node (network graphic user interface). Other means used to store and retrieve the correspondence between functions and second associated infrared signals, for a particular analog device, may be used instead of this correspondence table 601. The table 601 may contain other data to configure the system in order to manage and control the analog device.

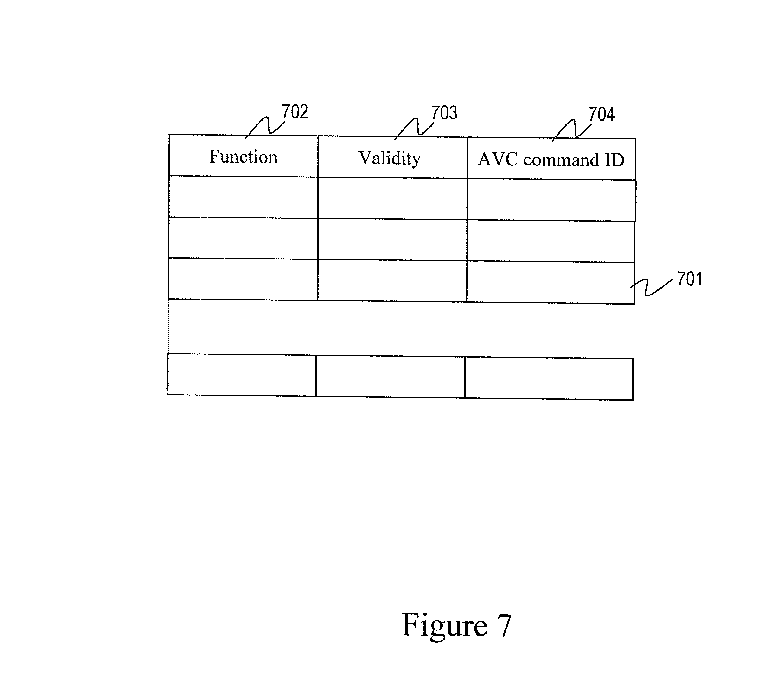

**Figure 7** shows a table of correspondence between functions and second command signals of an AV/C type for a digital device. Such a table 701 is stored, for each digital device, in a node (for example the one to which this digital device is connected through an IEEE 1394 digital link). Associated with a function identifier 702, a validity field 703 (for example on one bit) indicates whether the digital device is capable of executing the function indicated in the field 702. The field 704 contains an identifier of the AV/C command which must be sent to the digital device so that it fulfills the function indicated in the field 702. The AV/C ("AudioVideo/Command") commands are described in the specifications of the "AV/C Digital Interface Command Set General Specification and AV/C Panel Subunit Specification". Other means used to store and retrieve the correspondence between functions and associated AV/C commands for a particular digital device may be used instead of this correspondence table 701. It is possible for example to use a DCM/FCM (Device Control Module/Function Control Module) descriptor as defined in the HAVi described in the reference document "HAVi (Home Audio Video interoperability) specifications (version 1.1 May 15, 2001)". The table 701 may contain other pieces of data to configure the system with a view to managing and controlling the digital device.

**Figure 8** illustrates the possibility offered by the present invention to use a same remote-control unit to navigate in the graphic user interface of a node or in that of a source device without prior selection of the node or of the source device.

It is assumed that the user is before a node of the network (local node) to which a display device is connected, and that a connection is set up between this display device and a source device. The source device may be an analog or digital device, and may be connected to the local node or to another node (remote node).

If the source device is an analog device, it is also assumed that the learning phase, as described here above with reference to figures 3 and 4, has preliminarily been implemented and that, at the end of this phase, the network has learnt second infrared signals (sent out by the remote-control unit of the source device) enabling the source device to be controlled. The second infrared signals and the associated functions are stored in a correspondence table as illustrated in figure 6.

If the source device is digital, it is also assumed that the correspondence table as illustrated in Figure 7 has previously been filled. It associates functions with second command signals of an (AV/C) audio-video command type capable of being executed by the source device to apply these functions.

Classically, the user may press navigation keys ("left" 82, "right" 83, "up" 84, "down" 85, "selection" 86) of the remote-control unit 81 of the local node to send first infrared signals to the local node, so that the local node applies the functions associated with the first infrared signals received, thus enabling the user to navigate in the network graphic user interface 87 (also called the graphic user interface of the node) which is displayed on the display device. The network graphic user interface 87 has a plurality of screens 89a, 89b, 89c...

The screen referenced 89b is for example a screen for selecting a device from a list of devices. Such a selection is used, for example, to set up connections. In the example illustrated, by pressing the keys "up" 84 and "down" 85, the user can move a cursor to one of the following devices: set-top box (STB), DVD reader, digital camcorder and videocassette recorder. Then, he presses the "selection" key 86 to select the device indicated by the cursor.

The screen 89a is for example one of the screens used during the learning phase (see description below of figures 3 and 4). It enables the user to fill the correspondence table of figure 6, for a given analog source device. In the example illustrated, by pressing the navigation keys "up" 84 and "down" 85, the user can shift the cursor on one of the following functions of the analog source device : PLAY, PAUSE, STOP, RECORD and FF (fast forward). Then, he presses the "selection" key 86 to select the function indicated by the cursor and pass to one or more other screens (not shown) enabling him to rename the function (field 605 of figure 6), to associate a second infrared signal (field 604 of figure 6) with it or erase the information defining a second infrared signal (field 604 of figure 6). The erasure of the content of the field 604 has the effect of restoring the default name of the function (field 602) and modifying the value of the "validity" field 603.

In the particular embodiment of the invention described with reference to figure 8, the user may press the same navigation keys ("left" 82, "right" 83, "up" 84, "down" 85, "selection" 86) of the remote-control unit 81 of the local node to send first infrared signals to the local node, so that the local node interprets them as requested to ask the source device to apply the functions associated with the first infrared signals received, thus enabling the user to navigate in the graphic user interface of the source device 88 which is displayed on the display device. The graphic user interface of the source device 88 includes a plurality of screens 810a, 810b, 810c... It is displayed, for example, according to the OSD (on-screen display) technique and is superimposed on the video stream coming from the source device and available at the analog output interface of the node. It must be noted that, in this case, the local node does not itself apply the functions associated with the first infrared signals received.

The screen referenced 810a is, for example, the main menu of a DVD played back by a DVD player (which, in this case, is the above-mentioned source device). This menu includes a plurality of items each representing the function. In the example shown, by pressing the keys "up" 84 and "down" 85 of the mode-control unit 81, the user can move a cursor on one of the following items of the main menu: "playback menu", "subtitles", "languages" and "bonus". Then, by pressing the key "selection" 86, he selects the item indicated by the cursor so that the corresponding function is applied by the DVD player (thus making it possible, for example, to launch the reading of the video or pass to another screen (not shown) enabling modification of the language for the sound or subtitles).

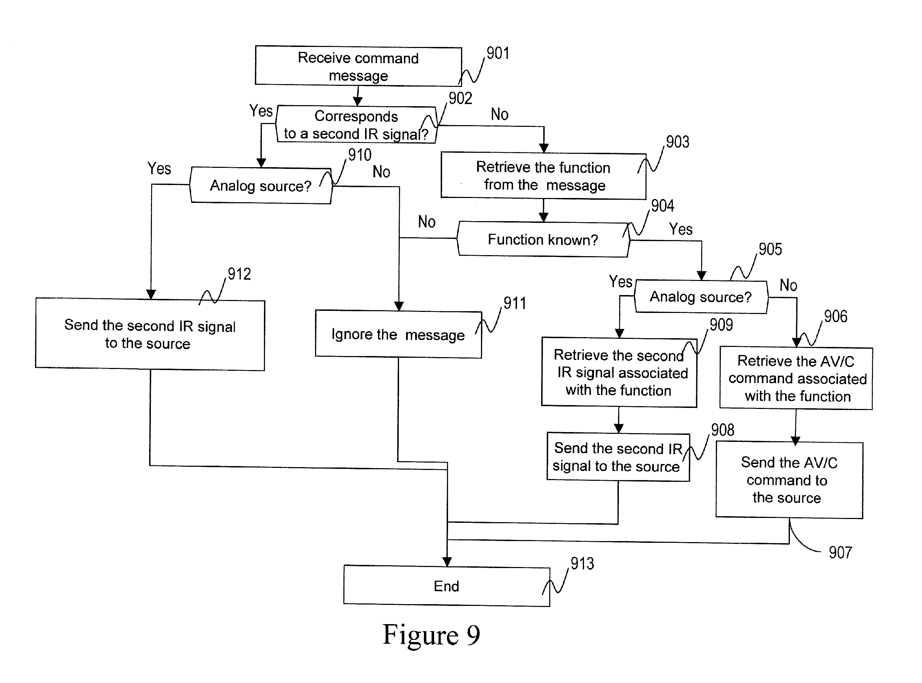

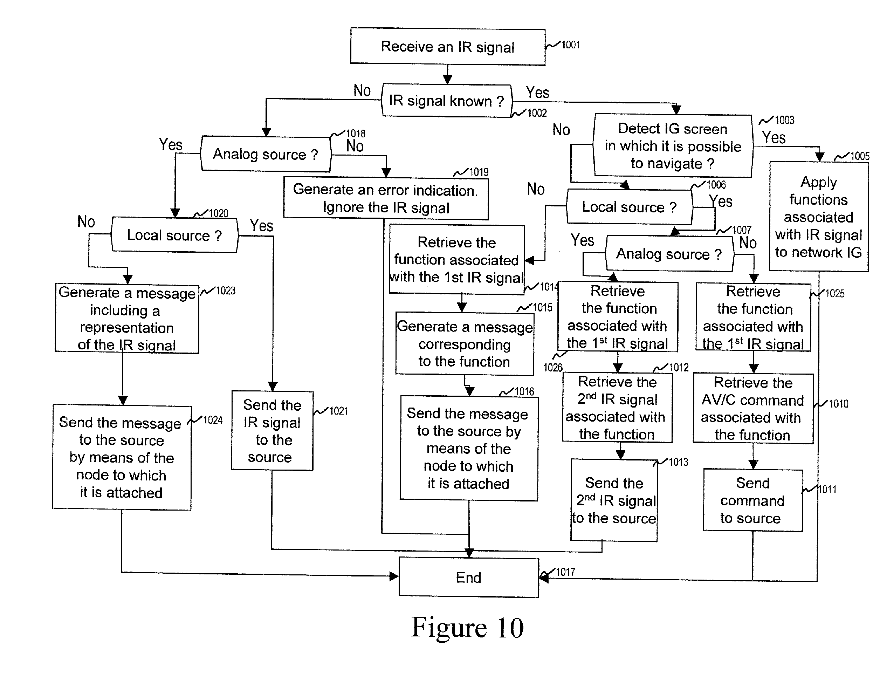

Referring now to **figure 9**, a description is given of the processing performed by a node connected to a source device, when this node receives a command message transmitted by another node having received an infrared signal compliant with the method described with reference to figure 10 described here below.

After receiving a command message (step 901), the node verifies that this command message contains information corresponding to a second infrared signal (step 902).

If the verification is positive at the step 902, then the node checks whether the source device to be controlled, identified in the command message, is of the analog or digital type (step 910). If it is an analog device, the node builds the second infrared signal from information contained in the command message, and then sends this second infrared signal to the source device (step 912). If it is a digital device, the node ignores the command message (step 911) and, as the case may be, sends an error message to the node having generated the command message.

If the verification is negative at the step 902, i.e. if the command message contains a representation of a function (and not information corresponding to a second infrared signal), the node retrieves the function represented in the command message (step 903). The node then ascertains that the retrieved function is a known function (step 904). A known function is a function that has been listed in one of the tables as described with reference to figures 6 and 7. In the event of a negative verification at the step 904, it ignores the command message (step 911) and, as the case may be, sends an error message to the node that had generated the command message. In the event of positive verification at the step 904, it ascertains that the source device to be controlled, identified in the command message, is of an analog or digital type (step 905). If it is an analog device then, from the correspondence table 601 of figure 6, the node retrieves the second infrared signal which was preliminarily learned and associated in this table with the retrieved function, for the source device to be controlled (step 909). Then, it sends this second infrared signal to the source device (step 908). If no information on a second infrared signal is contained in the table 601 (i.e. if the learning phase is not concerned by the function), the node ignores the command message and, as the case may be, sends an error message to the node having generated a command message. If it is a digital device (at the step 905) then, from the correspondence table 701 of figure 7, the node retrieves the information enabling the building of the second AV/C type command signal corresponding to the retrieved function (step 906), then sends this AV/C command to the digital type source device, through the IEEE 1394 interface of the node (step 907).

Referring now to **figure 10,** a description is given of the processing performed by a node having received an infrared signal after a user close to the node has pressed a key of a remote-control unit.

After having received an infrared signal (step 1001), the node verifies that this infrared signal corresponds to one of the first infrared signals (i.e. to one of the proprietary infrared signals, proper to the network and sent by the remote-control unit of the node) (step 1002).

If the verification is negative at the step 1002 (which means that the infrared signal received by the node in the second infrared signal sent with the remote-control unit of the source device), the node checks whether the source device to be controlled is of the analog or digital type (step 1018). If it is an analog device, the node checks whether the source device to be controlled is connected to it (in this case the source device is said to be local) or connected to another node (in this case the source device is said to be remote) (step 1020). If the source device is an analog and local device, the node sends the second infrared signal to the source device (step 1021). If the source device is an analog and remote device, the node generates a command message containing a representation of a second infrared signal (step 1023), then sends this command message to the remote node to which the analog source device is connected (step 1024). If the source device is a digital device (at the step 1018), the node ignores the infrared signal received and an error message may be sent back to the user by an OSD type display on the display device (step 1019).

In the event of positive verification at the step 1002 (which means that the infrared signal received by the node is a first infrared signal sent with the remote control unit of the node), the node checks (step 1003) whether a screen of its own graphic user interface (network graphic user interface) is displayed on the display device to which it is connected and whether, in this screen, navigation functions can be applied. If a network interface in which it is possible to navigate is detected, the node applies the function associated with the first infrared signal, in the current context of its graphic user interface (step 1005). If test is negative then, at the step 1003, the node checks whether the source device is connected to it (in this case, the source device is called a local device) or is connected to another node (in this case, the source device is said to be a distant node) (step 1006).

If the source device is local (at the step 1006), the node checks whether the source device to be controlled is of an analog or digital type (step 1007).

If, at the step 1007, it is an analog device, then the node retrieves the function associated with the first infrared signal received (step 1026), then retrieves the second infrared signal associated with this function (step 1012) and finally sends this second infrared signal to the source device (step 1013). At the step 1026, the node uses for example a first correspondence table which it stores. This first table (not shown) associates a function with each first infrared signal sent by the remote-control unit of the node (for example, the first infrared signal sent when the user presses the key "up" 84 is associated with the UP, i.e. the upward shift of the cursor on the graphic user interface). At the step 1012, the node uses for example a second table (illustrated in figure 6) which, after learning (see figures 3 and 4) associates a second infrared signal with each function that can be performed by the analog source device.

If, at the step 1007, it is a digital device, then the node retrieves the function associated with the first infrared signal received (step 1025), then retrieves the AV/C command associated with this function (step 1010) and fmally send this AV/C command to the source device (step 1011). The step 1025 is identical to the step 1026 described here above. At the step 1010, the node uses, for example, a third table (illustrated in figure 7), which associates an AV/C command with each function that can be performed by the digital source device.

If the source device is remote (at the step 1006), the node retrieves the function associated with the first infrared signal received (step 1014, identical to the step 1026 already described here above), then generates a command message containing a representation of the function (step 1015) and finally send this command message to the remote node to which the remote source device is connected (step 1016).

The remote node then applies the algorithm described with reference to figure 9 to send the command coming from the message to the source device.

## Claims

1. A method of navigation in at least one graphic user interface coming from a device included in a communications network comprising a plurality of devices, the method comprising the following steps implemented in a controller (103a, 103b, 103c) connected to a display device (107a, 107b, 107c, 107d):
- detecting (1001) a first navigation command signal coming from a remote-control unit (81) and associated with a function;
- verifying (1003) the display, on the display device, of at least one graphic user interface of the controller in which navigation functions are applicable; and
- in the event of positive verification: applying (1005), by the controller, the function associated with the first navigation command signal;
- in the event of negative verification: transferring (1016) to a source device, for which a connection with the display device is set up, at least one piece of information enabling the source device to apply the associated function to the first navigation command signal.

2. A method according to claim 1 wherein, in the event of negative verification, the step of transfer of at least one piece of information to the source device comprises the following steps:
- determining (1025, 1026) the function associated with the first navigation command signal;
- determining (1010, 1012) a second command signal associated with the function and designed for the source device; and
- sending (1011, 1013) the second command signal to the source device.

3. A method according to claim 2 wherein the determining of the second command signal is done through a step for placing said function in correspondence with a list of functions each associated with a second command signal proper to the source device.

4. A method according to claim 2 or 3, furthermore comprising a step for determining (1007) the type, whether analog on digital, of the source device.

5. A method according to claim 4 wherein, when the device is of an analog type, the second command signal proper to the source device type has been preliminarily recorded during a learning phase (370 to 377) by the network associating a function with this second command signal.

6. A method according to claim 5, wherein the second command signal is of an infrared type and is sent (1013) to the source device through an analog channel.

7. A method according to claim 4 wherein, should the device be of a digital type, the second command signal is of a audio/video digital command type sent (1011) to the source device through a digital channel.

8. A method according to any of the claims 1 to 7 wherein, in the event of negative verification, the method comprises a step for determining (1006) the type, whether local or remote, of the source device, the source device being of the local type if it is directly connected to the controller and of the remote type if it is connected to the controller through the network
and wherein, if the source device is of the remote type, the step for transferring at least one piece of information to the source device comprises the following steps: determining (1014) the function associated with the first navigation command signal; and sending (1016) the source device a message, through the network, enabling said function to be obtained.

9. A method according to any of the claims 1 to 8 wherein the application, by the source device, of the function associated with the first navigation control signal is a step of navigation within the graphic user interface (88) of the source device displayed on the display device connected to the controller.

10. A method according to any of the claims 1 to 8, wherein the application by the source device, of the associated function to the first navigation command signal, constitutes a step for the command of the source device, when the source device does not have a graphic user interface or when the graphic user interface of the source device is not displayed on the display device connected to the controller.

11. A method according to any of the claims 1 to 10, wherein the controller is a node (103a, 103b, 103b) of a backbone network comprising a plurality of nodes enabling the interconnection of the terminals, including the source device and the display device.

12. A method according to any of the claims 1 to 11 wherein the graphic user interface (87) of the controller comprises at least one screen belonging to the group comprising:
- screens for the selection of a device from among a list of devices;
- screens for the configuration of the network to be defined;
- screen enabling connections to be set up;
- screens enabling the network to learn at least one second command signal proper to the source device.

13. A method according to any of the claims 1 to 12, wherein the function related to the first navigation command signal belongs to the group comprising:
- a function for shifting a cursor upwards on a graphic user interface,
- a function for shifting a cursor downwards on a graphic user interface,
- a function for shifting a cursor to the right on a graphic user interface;
- a function for shifting a cursor to the left on a graphic user interface; and
- a function for accepting the position of the cursor on a graphic user interface.

14. A computer program product that can be downloaded from a communications network and/or recorded on a computer-readable support and/or executable by a processor, said computer program product comprising program code instructions to execute steps of the method according to any of the claims 1 to 13, when the program is executed on a computer.

15. A computer-readable and totally or partially detachable storage means storing a set of instructions executable by said computer to implement the method according to any of the claims 1 to 13.

16. A controller (103a, 103b, 103c) that is connected to a display device (107a, 107b, 107c, 107d) and included in a communications network comprising a plurality of devices, the controller comprising:
- means to detect a first navigation command signal coming from a remote command device and associated with a function;
- means to verify the display, on the display device, of at least one graphic user interface of the controller in which navigation functions are applicable;
- means for the application, by the controller, of the associated function to the first navigation command signal, said application means being activated in the event of positive verification by the verification means;
- means for the transfer to a source device, for which a connection with the display device is set up, of at least one piece of information enabling the source device to apply the associated function to the first navigation command signal, said transfer means being activated in the event of negative verification by the verification means.

17. A controller according to claim 16, wherein the means for the transfer of at least one piece of information to the source device comprise:
- means to determine the function associated with the first navigation command signal;
- means to determine a second command signal associated with said function and designed for the source device; and
- means to send the second command signal to the source device.

18. A controller according to claim 17, wherein the means for determining the second command signal comprise means for placing said function in correspondence with a list of functions each associated with a second command signal proper to the source device.

19. A controller according to claim 17 or 18, further comprising means for determining the type, whether analog on digital, of the source device.

20. A controller according to claim 19 wherein, when the device is of an analog type, the second command signal proper to the source device type has been preliminarily recorded during a learning phase by the network associating a function with this second command signal.

21. A controller according to claim 20, wherein the second command signal is of an infrared type and the controller comprises means for sending the second command signal to the source device through an analog channel.

22. A controller according to claim 19, wherein the controller comprises the following means, activated if the device should be of a digital type: means for sending a second command signal of an audio/video digital command type to the source device through a digital channel.

23. A controller according to any of the claims 16 to 22, comprising the following means activated in the event of negative verification by the verification means: means for determining the type, whether local or remote, of the source device, the source device being of the local type if it is directly connected to the controller and of the remote type if it is connected to the controller through the network
and wherein the means for transferring at least one piece of information to the source device comprise the following means activated if the source device is of the remote type: means for determining the function associated with the first navigation command signal; and means for sending the source device a message, through the network, enabling said function to be obtained.

24. A controller according to any of the claims 16 to 23, wherein it is a node of a backbone network comprising a plurality of nodes enabling the interconnection of the terminals, including the source device and the display device.

25. A controller according to any of the claims 16 to 24, wherein the graphic user interface of the controller comprises at least one screen belonging to the group comprising:
- screens for the selection of a device from among a list of devices;
- screens for the configuration of the network to be defined;
- screen enabling connections to be set up;
- screens enabling the network to learn at least one second command signal proper to the source device.

26. A controller according to any of the claims 16 to 25, wherein the function related to the first navigation command signal belongs to the group comprising:
- a function for shifting a cursor upwards on a graphic user interface,
- a function for shifting a cursor downwards on a graphic user interface,
- a function for shifting a cursor to the right on a graphic user interface;
- a function for shifting a cursor to the left on a graphic user interface; and
- a function for accepting the position of the cursor on a graphic user interface.
